Europäisches Patentamt

European Patent Office

Office européen des brevets

(11) Veröffentlichungsnummer: **0 369 985**
**A1**

## (12) EUROPÄISCHE PATENTANMELDUNG

(21) Anmeldenummer: 89890292.9

(22) Anmeldetag: 08.11.89

(51) Int. Cl.⁵: **F01N 3/02**

(30) Priorität: 14.11.88 DE 3838589

(43) Veröffentlichungstag der Anmeldung:
23.05.90 Patentblatt 90/21

(84) Benannte Vertragsstaaten:
AT CH DE ES FR GB IT LI SE

(71) Anmelder: VOEST-ALPINE AUTOMOTIVE
Gesellschaft m.b.H.
Derfflingerstrasse 15
A-4017 Linz(AT)

(72) Erfinder: Kaser, Artur, Dipl.-Ing.

A-4641 Steinhaus 115(AT)
Erfinder: Pfeifer, Ulf, Dr.-Ing.
Pötzleinsdorferstrasse 172
A-1180 Wien(AT)

(74) Vertreter: Matschnig, Franz, Dipl.-Ing.
Siebensterngasse 54
A-1070 Wien(AT)

(54) **Regenerierbares Partikelfilter für Abgase.**

(57) Partikelfilter für Abgase mit einem von wabenförmigen Kanälen (9, 10) durchzogenen porösen Filterkörper und Widerstandsheizelementen (18) zum zonenweisen Abbrennen der Rußpartikel. Die Widerstandsheizelemente (18) für jeweils eine Zone sind perforierte Blechstreifen, deren Längsstege (20) zu U-förmigen Heizleitern gebogen sind. Querstege (21) schaffen bei Zerstörung einzelner Heizleiter einen Umgehungsweg. Die Widerstandsheizelemente (18) sind billig herzustellen und leicht zu montieren.

FIG. 5

EP 0 369 985 A1

## Regenerierbares Partikelfilter für Abgase

Die Erfindung handelt von einem Filter zum Entfernen von Rußpartikeln aus Abgasen mit einem von wabenförmig angeordneten Filterkanälen durchzogenen Filterkörper aus porösem Material, wobei im Bereich der Eintrittsöffnungen der gaseintrittsseitig offenen Filterkanäle wenigstens zwei für angrenzende Bereiche der Stirnfläche des Filterkörpers Heizzonen bildende Widerstandsheizelemente angebracht sind.

Diese Widerstandsheizelemente werden zeitweise einzeln oder gemeinsam mit einer Stromquelle verbunden, um im Zusammenwirken mit den Filterkörper durchströmenden Gasen die an den Kanalwänden angesetzten Rußpartikel abzubrennen.

Ein derartiges Filter ist aus der DE-OS 37 12 333 bekannt. Bei diesem sind die die einzelnen Heizzonen bildenden Widerstandsheizelemente harfenartig oder mäanderförmig auf der Stirnfläche des Filterkörpers verlegte Drähte, die über den Eintrittsöffnungen der Filterkanäle in diese eintauchende Drahtschlaufen bilden. Naturgemäß ist der Querschnitt eines Drahtes über seine Länge konstant, wodurch über seine gesamte Länge dieselbe Wärmemenge freigesetzt wird. Dadurch erhitzt sich der Draht auch dort, wo er es nicht soll oder muß.

Da weiters Länge und Querschnitt des Drahtes zum Erreichen der Zündtemperatur aufeinander abgestimmt sein müssen, besteht bei der Disposition und Dimensionierung der Heizzonen keine konstruktive Freiheit. Außerdem ist die Verlegung der dünnen Drähte mit ihren Schlaufen auf der Stirnfläche des Filterkörpers sowie deren Verbindung mit den nach außen führenden Stromleitungen bei der Fertigung ein außerordentlich schwieriger und zeitraubender Arbeitsgang.

Es ist daher das Ziel der Erfindung, Widerstandsheizelemente zu schaffen, die konstruktive Freiheit bei der Zonenteilung geben, die zugleich aber billig in Fertigung und Montage, zuverlässig und langlebig sind.

Bei einem gattungsgemäßen Filter wird das dadurch erreicht, daß die Widerstandsheizelemente sich in ihrer Länge und in ihrer Breite über eine ganze Heizzone erstreckende perforierte Blechstreifen sind, die ein aus Querstegen und Längsstegen bestehendes Gitter bilden, wobei die Längsstege zu U-förmigen Heizleitern gebogen sind, die in die offenen Filterkanäle ragen.

Dadurch wird für jede Heizzone nur ein billiges, robustes und für die Massenproduktion geeignetes Teil benötigt, das leicht montierbar ist. Dadurch, daß die Heizelemente zweidimensionale Gitter bilden, wird der elektrische Strom bei Zerstörung eines U-förmigen Heizleiters umgeleitet, so daß die ganze Heizzone im wesentlichen funktionsfähig bleibt

Weiters ist es dadurch möglich, die einzelnen Leitungsquerschnitte so abzustimmen, daß nur die schmalen Längsstege bis zum Glühen erhitzt werden, die anderen den Filterkörper berührenden Teile jedoch weniger, was die Lebensdauer erhöht.

Dadurch, daß es sich um ein zweidimensionales Gitter mit individuell gestaltbaren Querschnitten handelt, kann dieses der gewählten Größe und Form (bei rundem Querschnitt des Filterkörpers) der einzelnen Heizzonen angepaßt werden.

Alle diese Vorteile treten noch stärker hervor, wenn man den Heizleiter in Weiterbildung der Erfindung so gestaltet, daß die Stege in Richtung der Diagonalen der schachbrettartig angeordneten Filterkanäle liegen.

Dadurch Können die verbindenden Querschnitte größer gewählt werden, ohne die Gasströmung zu behindern, außerdem wird die Steifigkeit des gesamten Widerstandsheizelementes erhöht.

Zur weiteren Erhöhung der Steifigkeit wird in Fortbildung der Erfindung vorgeschlagen, die einzelnen U-förmigen Heizleiter durch Biegung um ihre Längsachse zu versteifen, wodurch auch die Gefahr strömungserregter Schwingungen abnimmt. Werden sie so gebogen, daß ihre Seitenränder den Innenwänden der Gaseintrittskanäle nahekommen, können Rußablagerungen direkt durch Kontakt entzündet werden.

Durch Einschnürung der U-förmigen Heizleiter an bestimmten Stellen läßt sich die Lage der Stelle höchster Temperatur und damit das Abbrennverhalten optimieren.

Gemäß einer Abwandlung der Erfindung ist es bei diagonaler Anordnung der Widerstandsheizelemente möglich, diese auch zum Abdecken der gasaustrittsseitig offenen Kanäle einzusetzen, wodurch nicht nur das Verstopfen dieser Kanäle mit Keramikmasse überflüssig wird, sondern auch der Heizleiter durch die zwischen den Kanälen bestehende Druckdifferenz - die ja dem Druckverlust des Filters entspricht - an die Stirnfläche des Filterkörpers gepreßt wird.

In weiterer Ausgestaltung der Erfindung wird vorgeschlagen, die stirnseitigen Enden der Widerstandsheizelemente als aus dem Filtergehäuse herausgeführte Kontaktzungen auszubilden, wodurch Leitungsverbindungen im Inneren des Filters vermieden werden. Insbesondere läßt sich der Masseanschluß besonders einfach gestalten, indem man die Massezungen entweder direkt zum Anschlußflansch führt oder von der Stirnfläche des Filterkörpers wegbiegt und mit einem Masseleiter in Kontakt bringt, der mit dem Gehäuseflansch verbunden ist, je nach Disposition der Heizzonen. Wenn man schließlich die Heizzonen so anbringt, daß alle Massezungen in einer Linie liegen, genügt ein einziger schmaler Blechstreifen als Masseanschluß.

Die Erfindung ist in den folgenden Abbildungen dargestellt:

Figur 1: Erfindungsgemäßes Partikelfilter im Längsschnitt,

Figur 2: Ansicht A in Fig. 1,

Figur 3: Detail B in Figur 2, stark vergrößert, (um 90° verdreht),

Figur 4: Variante zu Fig. 3,

Figur 5: Axionometrische Darstellung, teilweise aufgeschnitten, entsprechend Fig. 3,

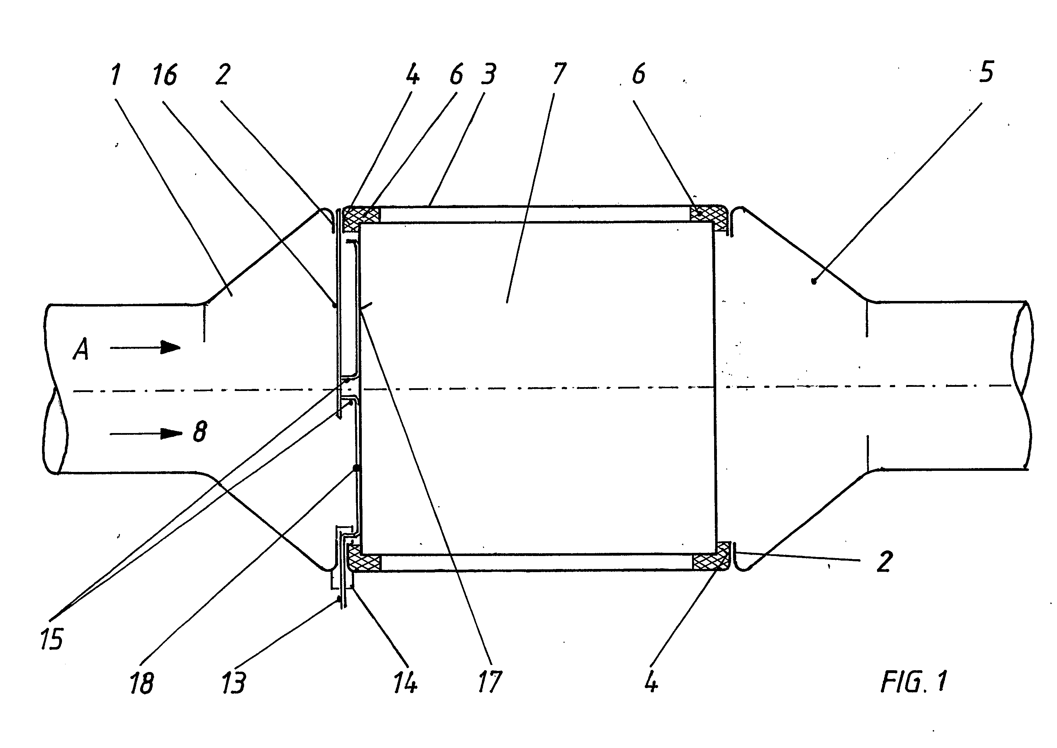

Fig. 1 zeigt das Partikelfilter aus einem von einem Einströmkonus 1 , einem Mantel 3 und einem Ausströmkonus 5 gebildeten Gehäuse, einem keramischen Filterkörper 7 mit später zu beschreibenden Kanälen und stromaufwärts des Filterkörpers 7 angeordneten Widerstandsheizelementen 18 .

Der Einströmkonus 1 und der Austrittskonus 5 sind über Flansche 2 mit den Flanschen 4 des Mantels 3 auf geeignete Weise fest verbunden. Die Flansche 2, 4 sind in der gezeigten Ausführungsform nach innen gebogen, sie können aber ebensogut nach außen gebogen oder angeschweißt und durch Schrauben, Bördeln, Löten oder Schweißen miteinander verbunden sein.

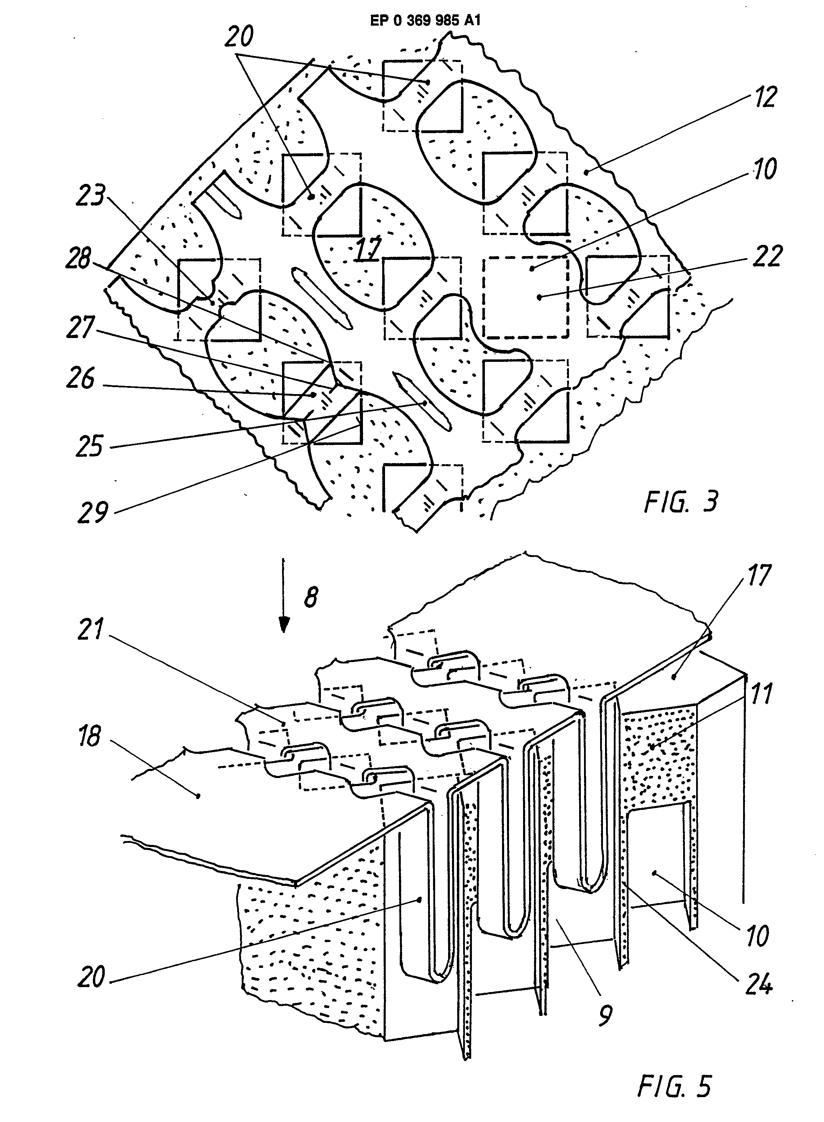

Im Inneren des Mantels 3 ist der Filterkörper 7 axial und radial z.B. über Packungsringe 6 festgehalten. Er besteht aus einem porösen Material, etwa Keramik und enthält längsgerichtete schachbrettartig angeordnete Eintrittskanäle 9 und Austrittskanäle 10 , wie in Fig. 5 zu sehen. Das zu reinigende Gas strömt in die vorne offenen Eintrittskanäle 9 , tritt durch die porösen Trennwände 24 und verläßt den Filterkörper 7 durch die nach hinten offenen Austrittskanäle 10 .

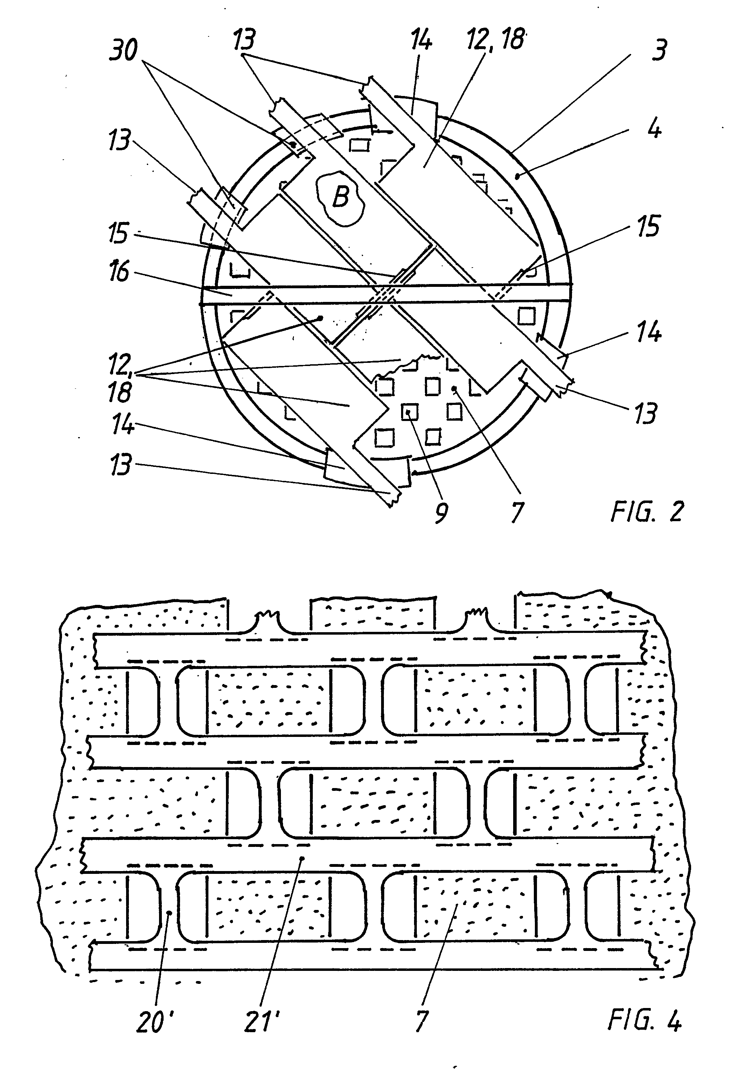

Fig. 2 ist eine Stirnansicht des Filters mit abgenommenem Eintrittskonus 1 in Strömungsrichtung 8 . Dort und in Fig. 1 ist zu erkennen, daß auf der Stirnfläche 17 mehrere Widerstandsheizelemente 18 aufliegen, die Bereiche 12 bilden. Die einzelnen Widerstandsheizelemente 18 können einzeln unter Strom gesetzt werden, wodurch sie in der betreffenden Zone das Abbrennen des in den Eintrittskanälen 9 angesammelten Rußes einleiten.

Die Widerstandsheizelemente 18 bilden Kontaktzungen 13, die durch Isolatoren 14 zwischen den Flanschverbindungen 2, 4 aus dem Filtergehäuse hinausgeführt sind, wozu Teile 30 der Flansche abgehoben sein können um Raum für die Isolatoren 14 zu schaffen.

Das andere Ende der Widerstandsheizelemente läuft in der dargestellten Ausführung in aufwärts gebogene Massezungen 15 aus, die einen Masseleiter 16 berühren, der ein zwischen den Flanschen 2, 4 gehaltener Blechstreifen ist. Er steht mit den Flanschen 2, 4 in leitender Verbindung, wodurch eine Seite der Widerstandsheizelemente 18 mit dem Gehäuse 1, 3, 5 und damit mit Masse verbunden ist.

In Fig. 2 sind die Bereiche 12 so angeordnet, daß alle Massezungen 15 den Masseleiter 16 berühren. Es liegt aber im Bereich der Erfindung, die Widerstandsheizelemente 18 nach Belieben zu formen und anzuordnen, wobei unter Verzicht auf den Masseleiter 16 die Massezungen auch einzeln zum Flansch 2, 4 geführt sein können. Die besondere Gestaltung der Widerstandsheizelemente 18 schafft dafür die Voraussetzung.

In den Figuren 3 und 4 sind zwei verschiedene Gestaltungsmöglichkeiten der Widerstandsheizelemente 18 stark vergrößert dargestellt. Beiden Varianten ist gemeinsam, daß die Widerstandsheizelemente 18 Blechstreifen sind, die so ausgestanzt sind, daß sie als Heizleiter dienende Längsstege 20 und diese verbindende Querstege 21 bilden. Die Längsstege 20 sind U-förmig gebogen, so daß sie in die Eintrittskanäle 9 des Filterkörpers 7 eintauchen.

Die Widerstandsheizelemente 18 können schnell und präzise mit einfachen Stanz- oder Preßwerkzeugen hergestellt werden. Bei Herstellung durch Pressen ist es ohne Mehraufwand möglich, die Steifigkeit des Widerstandsheizelementes 18 durch Bildung von Sicken 25, in Fig. 3 in den Querstegen 21 oder Biegung der Heizleiter 26 auch in Längsrichtung zu erhöhen. Wenn die Seitenkanten 28 den Innenwänden 29 der Gaseintrittskanäle 9 nahekommen, können Rußablagerungen direkt gezündet werden.

In Fig. 3 und 4 ist zu erkennen, daß der Filterkörper 7 schachbrettartig angeordnete Eintrittskanäle 9 enthält, die nach dessen Stirnfläche 17 hin offen sind und in die die partikelbeladenen Abgase einströmen. Die Austrittskanäle (10) sind gegenüber der Stirnfläche 17 verschlossen, normalerweise durch einen keramischen Stopfen 11.

In der Ausführungsform der Fig. 3 sind die Stege 20, 21 des Widerstandsheizelementes 18 in Richtung der Diagonalen des Schachbrettes auf der Stirnfläche 17 angeordnet. Der elektrische Strom fließt hier parallel durch mehrere Längsstege 20 . Wenn einer dieser Längsstege zerstört wird, umgeht der elektrische Strom diese Störstelle unter Benützung der Querstege 21 . Das Widerstandsheizelement, im wesentlichen funktionsfähig, bleibt also.

Weiters sind in Fig .3 zwei Abwandlungen erkennbar. Wenn man sich die Keramikstopfen 11 ersparen will, verbreitert man die Querstege zu Lappen 22 , die den Gasen den Eintritt in die Austrittskanäle verwehren und sogar durch die herrschende Druckdifferenz an die Stirnfläche 17 des Filterkörpers 7 angepreßt werden. In ähnlicher Weise lassen sich auch die Eintrittskanäle 9 hinten zustopfen, was nicht dargestellt ist.

Zur genauen Anpassung des Widerstandes an Strömungsgegebenheiten und an die Form und Größe des Widerstandsheizelementes 18 , aber auch zur Beeinflussung des Abbrennverhaltens, ist es möglich, einzelne oder alle Heizleiter 20 mit Einschnürungen 23 zu versehen, an denen dann die Stromdichte und damit die Temperatur höher ist.

Fig. 4 unterscheidet sich von Fig. 3 nur dadurch, daß die Längsstege 20 und Querstege 21 nicht diagonal, sondern in Richtung des Schachbrettes ausgerichtet sind. Auch hier ist es möglich, ähnlich wie in Fig. 3, Lappen 22 oder Einschnürungen 23 mit demselben Effekt anzubringen.

Fig. 5 zeigt das Widerstandsheizelement nach Fig. 3 und einen kleinen Teil des Filterkörpers 7 aufgeschnitten in axionometrischer Ansicht. Die Heizleiter 20 tauchen in die Eintrittskanäle 9 ein, das Abgas tritt von diesen durch die Keramikwand 19 hindurch, wobei der mitgeführte Ruß abgelagert wird, und in die Austrittskanäle 10 ein, die durch einen Keramikstopfen 11 gegenüber der Stirnfläche 17 verschlossen sind.

Durch die erfindungsgemäße Konstruktion gestaltet sich auch der Zusammenbau des Partikelfilters besonders einfach und arbeitsökonomisch: Die einzelnen Widerstandselemente 18 können problemlos auf den im Gehäuse 6 eingepackten Filterkörper 7 aufgesetzt werden, wobei die Kontaktzungen 13 und die Massezungen 14 über den Mantelflansch 4 hinausragen. Sodann wird der Einlaufkonus 1 aufgesetzt und mit dem Flansch 4 verbunden.

Im Rahmen der Erfindung sind verschiedene Ausbildungen der Flansche 2, 4 und deren Verbindung durch Schrauben, Bördeln, Schweißen etc. denkbar. Dementsprechend können auch die Zungen 13, 15 in handwerklich geläufiger Weise ausgebildet und zwischen den Flanschen 2, 4 entweder verbunden oder isoliert hinaufgeführt werden.

Weitere Abwandlungen der abgebildeten Ausführungsbeispiele sind möglich. So könnte die Stirnfläche des Filterkörpers auch rechteckig sein und die einzelnen Widerstandsheizelemente so ausgebildet, daß ihnen die Stirnfläche weitgehend belegt werden kann. Es ist sogar denkbar, mehrere Filterkörper zusammenzufassen.

Insgesamt werden durch die erfindungsgemäße Gestaltung der Widerstandsheizelemente nicht nur die gestellten Aufgaben gelöst, sondern erst durch sie wird die billige Massenproduktion derartiger Filter möglich.

**Ansprüche**

1. Filter zum Entfernen von Rußpartikeln aus Abgasen mit einem von wabenförmig angeordneten Filterkanälen (9, 10) durchzogenen Filterkörper (7) aus porösem Material, wobei im Bereich der Eintrittsöffnungen der gaseintrittseitig offenen Filterkanäle (9) wenigstens zwei für angrenzende Bereiche der Stirnfläche (17) des Filterkörpers (7) Heizzonen (12) bildende Widerstandsheizelemente (18) angebracht sind, **dadurch gekennzeichnet**, **daß** die Widerstandsheizelemente (18) sich in ihrer Länge und in ihrer Breite über eine ganze Heizzone (12) erstreckende perforierte Blechstreifen sind, die ein aus Längsstegen (20) und Querstegen (21) bestehendes Gitter bilden, wobei die Längsstege (20) zu U-förmigen Heizleitern gebogen sind, die in die offenen Filterkanäle (9) ragen.

2. Filter nach Anspruch 1, **dadurch gekennzeichnet, daß** die Filterkanäle (9, 10) quadratischen Querschnittes schachbrettartig angeordnet sind und daß die Stege (20, 21) in Richtung der Diagonalen des Schachbrettes liegen.

3. Filter nach Anspruch 1, **dadurch gekennzeichnet, daß** die Heizleiter (20) zusätzlich zur U-förmigen Biegung auch um ihre Längsachse (27) gebogen sind.

4. Filter nach Anspruch 3, **dadurch gekennzeichnet, daß** die Heizleiter (26) so um ihre Längsachsen (27) gebogen sind, daß deren Seitenkanten (28) den Innenwänden (29) der Eintrittskanäle nahekommen oder diese berühren.

5. Filter nach Anspruch 2, **dadurch gekennzeichnet, daß** die zu den U-förmigen Heizleitern (20) gebogenen Stege eine oder mehrere Einschnürungen (23) aufweisen.

6. Filter nach Anspruch 2, **dadurch gekennzeichnet, daß** die Querstege (21) die Austrittskanäle (10) des Filterkörpers (7) abdecken.

7. Filter nach Anspruch 1, **dadurch gekennzeichnet, daß** mindestens ein stirnseitiges Ende der Widerstandsheizelemente (18) als Kontaktzunge (13) ausgebildet ist, die aus dem Filtergehäuse (1, 3, 5) hinausgeführt ist.

8. Filter nach Anspruch 7, **dadurch gekennzeichnet, daß** mindestens eine Kontaktzunge (13) der Widerstandsheizelemente durch den Anschlußflansch (2, 4) hinausgeführt ist.

9. Filter nach Anspruch 8, **dadurch gekennzeichnet, daß** mindestens einer der Flansche (2, 4) an den Durchführungsstellen der Kontaktzungen (13) Sicken (30) aufweist.

10. Filter nach Anspruch 7, **dadurch gekennzeichnet, daß** die anderen stirnseitigen Enden der Widerstandsheizelemente (18) als Massezungen (15) ausgebildet sind, die zum Gehäuseflansch (2, 4) geführt und mit diesem leitend verbunden sind.

11. Filter nach Anspruch 7, **dadurch gekennzeichnet, daß** die anderen stirnseitigen Enden der Widerstandsheizelemente (18) als Massezungen (15) ausgebildet sind, die von der Stirnfläche (17) des Filterkörpers weg gebogen sind und einen stromaufwärts der Stirnfläche (17) angeordneten Masseleiter (16) berühren, wobei dieser Masseleiter (16) mit dem Gehäuseflansch (2, 4) leitend in Verbindung steht.

12. Filter nach Anspruch 9, **dadurch gekennzeichnet, daß** mehrere Widerstandsheizelemente (18) auf der Stirnfläche (17) des Filterkörpers (7) so angeordnet sind, daß deren Kontaktzungen (13) am Außenrand des Filterkörpers (7) liegen und deren Massezungen (15) ungefähr in einer Linie enden, in der der Masseleiter (16) liegt und diesen leitend berührten.

FIG. 1

EP 0 369 985 A1

FIG. 2

FIG. 4

EP 0 369 985 A1

FIG. 3

FIG. 5

Europäisches
Patentamt

**EUROPÄISCHER RECHERCHENBERICHT**

Nummer der Anmeldung

EP 89 89 0292

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0 286 932 (FEV MOTORENTECHNIK GmbH & CO. KG) --- | | F 01 N 3/02 |
| A | US-A-4 652 727 (HIROKI HOSHIZAKI) ----- | | |

RECHERCHIERTE SACHGEBIETE (Int. Cl.5)

F 01 N 3/00
B 01 D 46/00

Der vorliegende Recherchenbericht wurde für alle Patentansprüche erstellt

| Recherchenort | Abschlußdatum der Recherche | Prüfer |
|---|---|---|
| DEN HAAG | 01-02-1990 | POLESAK, H.F. |